# EUROPEAN PATENT SPECIFICATION

(11) **EP 0 327 708 B1**
(45) Date of publication and mention of the grant of the patent: **24.03.1993**
(21) Application number: 88120983.7
(22) Date of filing: 15.12.1988
(51) Int. Cl.: H02B 1/04

(54) **Device for releasing quick couplings securing modular apparata to supporting profiled elements**
Vorrichtung zum Auslösen von Schnellverbindungen, die ein modulares Gerät für unterstützende Profilelemente befestigt
Dispositif pour libérer des accrochages rapides fixant des appareils modulaires à des éléments profilés de support

(30) Priority: 17.12.1987 IT 2307087
(43) Date of publication of application: 16.08.1989
(73) Proprietor: ABB Elettrocondutture S.p.A., I-20127 Milano (IT)
(72) Inventor: Monterosso, Raffaello, I-20060 Cassina de'Pecchi (Milan) (IT)
(74) Representative: Modiano, Guido, Dr.-Ing.

(56) References cited:
- DE-U- 7 609 710
- FR-A- 2 233 732
- FR-A- 2 328 312

## Description

The present invention relates to a device for releasing conventional block-like elements, termed quick couplings, which are normally used to removably secure modular apparata, and more particularly electric devices, such as differential switches, having a cap for protecting the electric connections which lead to the terminals of said devices, to their supporting profiled elements.

As is known, most modular electric devices, standardized according to the applicable laws, and in particular automatic switches, are fixed to their supporting planes, e.g. walls and ledges, by fit joining separate elements, termed "quick couplings", which allow to easily couple the devices to substantially U- or omega-shaped profiled elements which are rigidly associated with the supporting walls and to quickly release said devices with the simple aid of a rod-like tool, normally a screwdriver, which acts, by levering against the edge of the device, within a slot or opening formed in an extension provided on said quick couplings. In practice, the release of the quick couplings is possible and easy only when the exposed or outermost face of the device has no protruding elements which could make it difficult or impossible to insert the end of the screwdriver into the slot of the extension of the quick coupling.

Instead, in the case of modular apparata constituted e.g. by automatic switches comprising automatic overload protection devices and differential current detector devices, the need normally arises to cover and protect the electric connections provided between the differential current detector and the automatic protection device, which lead to the terminals of the device; such covering is normally performed by applying, by fit joint or snap coupling or with other fixing systems (such as e.g. screws), a protection cap which however, as it protrudes from the front wall of the device, prevents or can make it difficult to access the slot of the quick coupling with a screwdriver.

The aim of the present invention is therefore to provide a device for releasing quick couplings securing the above described modular apparata which is capable of allowing the easy and rapid release or disconnection of the modular apparatus from its supporting profiled element even in the presence of the cap for the protection of the electric connection cables.

Another object of the invention is to provide a release device structured so as to allow the simultaneous release of a plurality of quick couplings, provided on a multipolar apparatus or the like, using a single rod-like element.

Not least object of the invention is to provide a release device which is structurally simple, such as to not create increases in the bulk of the apparatus or significant increases in its cost.

This aim, as well as these and other objects which will become apparent from the following description, are achieved by a device for releasing quick couplings for removably connecting modular apparata, such as automatic differential switches, to conventional supporting elements, as defined in the appended claims.

The invention is hereinafter described in greater detail according to a preferred but not exclusive embodiment thereof, with reference to the accompanying drawings, given only by way of non-limitative example, wherein:
figure 1 is a schematic middle sectional view of an automatic electric switch, coupled to the supporting profiled element by means of a known quick coupling;
figure 2 is an also schematic view of an also known automatic differential switch with front protection cap and conventional quick coupling;
figure 2a is a perspective view of a known quick coupling, separated from the apparatus and from the supporting profiled element;
figure 3 is a schematic lateral view of a differential switch with protection cap and release device according to the invention;
figure 4 is a view of the same embodiment as figure 3 while it is being released by means of a screwdriver;
figure 5 is a perspective view of a release element according to the invention, associated to the cap; and
figure 6 is a partially sectional top view of a multipolar apparatus with a device for simultaneously releasing individual quick couplings, according to the invention.

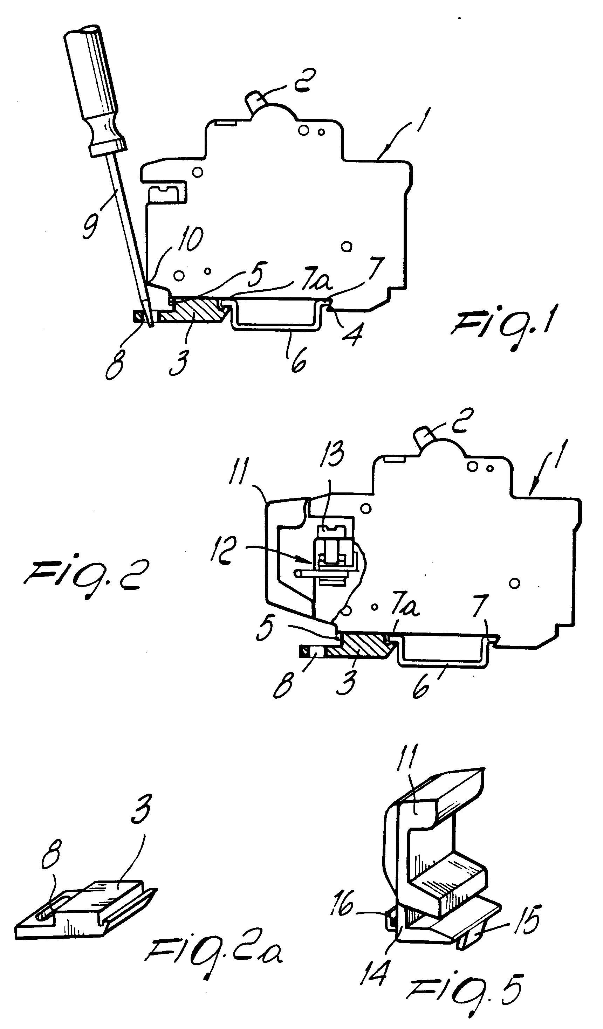

Figure 1 illustrates an electric switch 1, with movable contacts which can be reset by means of a lever 2, which is removably secured to a wall or to a supporting plane by means of a conventional "quick coupling" 3; more precisely, this embodiment has, on the face opposite to the one bearing the lever 2, an inclined tooth 4 and, in an opposite and spaced position, a step 5 substantially defining a right angle. A profiled supporting element 6 is fixed to the wall and has the shape of an omega, i.e. a profiled element the opposite longitudinal edges whereof are folded outwards so as to form two opposite hooks 7-7a.

The device 1 is stably secured to the profiled element 6 by means of a coupling element 3, substantially a dowel which is force inserted (normally due to the action of a spring embedded therein) between the hook 7a of the profiled element and the tooth 5 of the apparatus; assembly is therefore performed by inserting the inclined step 4 below the hook 7 of the profiled element 6 and then moving the base of the apparatus to rest on the hooks 7-7a and subsequently force hooking the element 3 between the hook 7a and the tooth 5.

In order to perform the release of the quick coupling 3 and therefore allow the removal of the apparatus 1, said quick coupling 3 has a slot or opening 8 so that by inserting therein the end of a screwdriver 9 (or another rod like tool) and by levering on the edge 10 of the apparatus the quick coupling 3 is moved away from the profiled element 6 and then partially rotated about the step 5 until it exits from its seat, thus releasing the apparatus.

In practice, the release of the quick coupling 3 is easy in the case of apparata such as those of figure 1, while in the case of apparata having a front cap 11 for protecting the connecting conductors 12 which lead to the terminals 13, as indicated schematically in figure 2, the insertion of the end of the screwdriver may be impossible, so that the release of the quick coupling 3 must be performed by means of special tools and in a time-consuming manner.

Since currently most differential switches have a front cap, the problem of release may obviously entail severe practical difficulties.

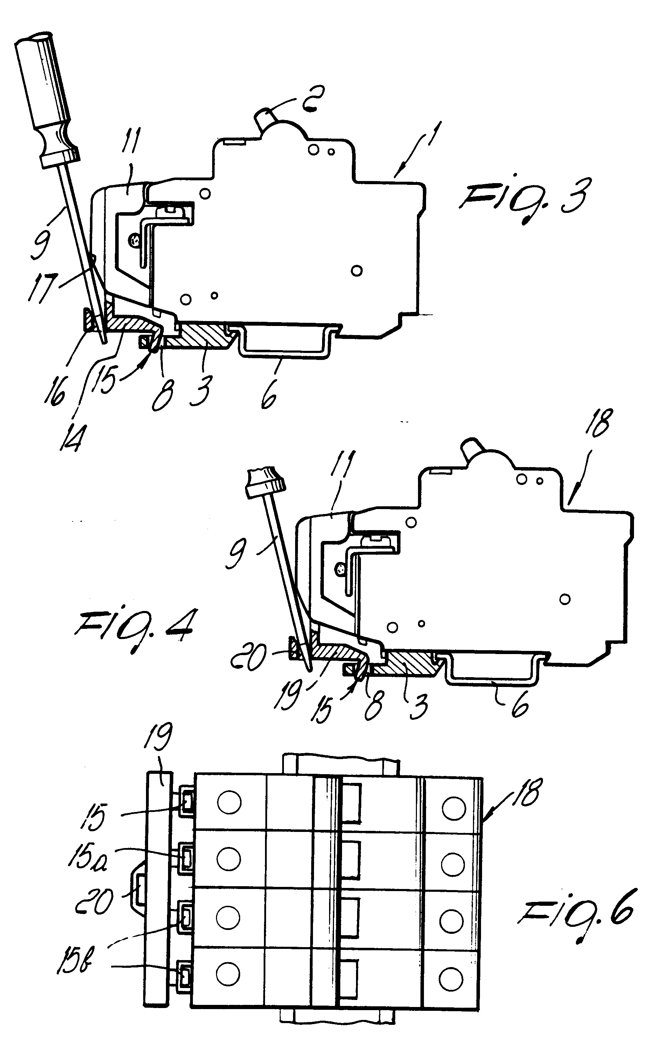

This problem is fully solved, according to the present invention, by applying (or by monolithically adding) to the protection cap 11 (figures 3 and 5) an L-shaped element 14, defining a horizontal wing substantially coplanar to the guide coupling 3 and having, at one end, a tooth 15 folded downwards and slightly inclined towards the front part of the apparatus, said tooth being intended to hook in the slot 8 of the quick coupling 3 (figure 3), and, at the opposite end, a slot 16 allowing the insertion therein of a screwdriver 9, so that it is possible to extract, by levering on the edge 17 of the cap 11, the quick coupling 3 in an easy manner as in the case of capless apparata.

The insertion of the inclined tooth 15 in the slot 8 of the coupling 3 is also easily performed during the snap engagement of the cap onto the apparatus, i.e. by first of all inserting the tooth 15 into the slot 8 and then rotating the cap against the apparatus until it locks thereon.

Again according to the invention, as illustrated in figures 4 and 5, the cap provided with said L-shaped release element allows to simultaneously release, with a single screwdriver, two or more quick couplings provided on a multipolar device 18 (figure 6) possibly constituted by a plurality of poles arranged side by side on a single profiled element 6. This solution provides a plurality of inclined teeth 15-15a-15b etc. (figure 6) protruding from a single crosspiece or strip 19 and engageable in the slots 8 of the individual quick couplings; in this manner, with a single screwdriver inserted in the single slot 20 which protrudes outwards from the strip 11 and by levering on the cap, all the teeth 15-15a-15b etc. are simultaneously pulled in the same direction, thus simultaneously releasing all the quick couplings. This in practice avoids the need to use two or more screwdrivers simultaneously to remove the multipolar device from its supporting profiled element 6.

Naturally, in its practical embodiment the invention as described above is susceptible to structurally and functionally equivalent modifications and variations and also to variations in the materials employed, in the dimensions of the various structural details and in its colors, without thereby abandoning the scope of the protection of the present invention as defined by the claims.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A device for releasing quick couplings (3) for removably securing, on U- or omega-shaped supporting profiled elements (6), modular apparata (1,18) and the like frontwardly having a protection cap (11) secured thereon, characterized by at least one engagement element (14), rigidly associated with said cap (11), having at one end at least one tooth (15,15a,15b) for engaging, during the snap connection of the cap to the apparatus (1,18), a slot or opening (8) of the quick coupling (3) and, at the opposite end, at least one release slot (16,20) allowing, by inserting a rod-like element (9) such as a screwdriver into said release slot and by levering on the edge (17) of the cap (11), an outward traction and therefore release of the quick coupling (3) of the apparatus (1,18), thus allowing to separate said apparatus from its supporting profiled element (6).

2. A device according to claim 1, characterized in that said engagement element (14) comprises a substantially L-shaped element with a wing substantially co-planar with said quick coupling (3), said wing having, at one end, said tooth (15) and, at the other end, said release slot (16).

3. A device according to claim 1, characterized in that said engagement element has a plurality of teeth (15,15a,15b) arranged side by side and protruding from one side of a crosspiece (19) which has said release slot on the opposite side, said teeth being engageable with as many quick couplings so as to allow, by means of a single screwdriver or the like, the simultaneous release of all quick couplings provided on a multipolar device (18) or the like.

## Patentansprüche

1. Vorrichtung zum Lösen von Schnellkupplungen (3), um abnehmbar auf U- oder omegaförmigen tragenden profilierten Elementen (6) modulare Geräte (1, 18) und dergleichen zu befestigen, die an der Frontseite vorne eine hierauf befestigte Schutzkappe (11) haben, gekennzeichnet durch wenigstens ein Eingriffselement (14), das steif dieser Kappe (11) zugeordnet oder mit dieser verbunden ist und an einem Ende wenigstens über einen Zahn (15, 15a, 15b) verfügt, um während der Schnappverbindung der Kappe gegen das Gerät (1, 18) in einen Schlitz oder eine Öffnung (8) der Schnellkupplung (3) und am gegenüberliegenden Ende in wenigstens einen Löseschlitz (16, 20) einzugreifen, der unter Einführen eines stabähnlichen Elementes (6), beispielsweise eines Schraubenziehers, in den Löseschlitz und durch Hebeln an der Kante (17) der Kappe (11) einen auswärts gerichteten Zug und damit Freigabe der Schnellkupplung (3) aus dem Gerät (1, 18), ermöglicht, wodurch eine Trennung dieses Gerätes von seinem tragenden profilierten Element (6) möglich wird.

2. Vorrichtung nach Anspruch 1, dadurch gekennzeichnet, daß dieses Eingriffselement (14) ein im wesentlichen L-förmiges Element mit einem Schenkel umfaßt, der im wesentlichen coplanar mit dieser Schnellkupplung (3) ist, wobei dieser Schenkel an einem Ende über diesen Zahn (15) und am anderen Ende über diesen Löseschlitz (16) verfügt.

3. Vorrichtung nach Anspruch 1, dadurch gekennzeichnet, daß dieses Eingriffselement eine Vielzahl von Zähnen (15, 15a, 15b) hat, die seitlich nebeneinander angeordnet sind und von einer Seite eines Kreuzstückes (19) vorstehen, das diesen Löseschlitz auf der gegenüberliegenden Seite hat, wobei diese Zähne mit ebensovielen Schnellkupplungen in Eingriff bringbar sind, so daß vermittels eines einzigen Schraubenziehers oder dergleichen das gleichzeitige Lösen sämtlicher Schnellkupplungen möglich wird, die auf einer mehrpoligen Einrichtung (18) oder dergleichen vorgesehen sind.

## Revendications

1. Dispositif pour libérer des accrochages rapides (3) fixant de manière amovible, sur des éléments profilés de support (6) en forme de U ou d'oméga, des appareils modulaires (1, 18) et analogue, présentant à l'avant un capuchon de protection (11) fixé sur eux, caractérisé par au moins un élément d'engagement (14) associé rigidement audit capuchon (11), dont une extrémité présente au moins une dent (15, 15a, 15b) destinée à s'introduire, durant la liaison d'encliquetage du capuchon sur l'appareil (1, 18), dans une fente ou ouverture (8) de l'accrochage rapide (3) et dont l'extrémité opposée présente au moins une fente de libération (16, 20) permettant, en insérant un élément en forme de tige (9) tel qu'un tournevis, dans ladite fente de libération et en exerçant un effet de levier sur le bord (17) du capuchon (11), une traction vers l'extérieur et par conséquent la libération de l'accrochage rapide (3) de l'appareil (1, 18), ce qui permet de séparer ledit appareil de son élément profilé de support (6).

2. Dispositif selon la revendication 1, caractérisé en ce que ledit élément d'engagement (14) comprend un élément sensiblement en forme de L, dont une aile est sensiblement coplanaire par rapport audit accrochage rapide (3), une extrémité de ladite aile présentant ladite dent (15) et l'autre extrémité, ladite fente de libération (16).

3. Dispositif selon la revendication 1, caractérisé en ce que ledit élément d'engagement présente une pluralité de dents (15, 15a, 15b) disposées côte-à-côte et faisant saillie d'un côté d'une pièce transversale (19) qui présente ladite fente de libération sur le côté opposé, lesdites dents étant susceptibles d'être introduites par un nombre d'accrochages rapides suffisamment grand pour permettre, au moyen d'un seul tournevis ou analogue, la libération simultanée de tous les accrochages rapides prévus sur un dispositif multipolaire (18) ou analogue.
